Europäisches Patentamt

European Patent Office

Office européen des brevets

(11) Publication number: **0 270 635 B1**

# EUROPEAN PATENT SPECIFICATION

(45) Date of publication of patent specification: **23.12.92**   (51) Int. Cl.⁵: **F41G  7/22, G02B 26/08**

(21) Application number: **87903999.8**

(22) Date of filing: **20.05.87**

(86) International application number:
**PCT/SE87/00253**

(87) International publication number:
**WO 87/07707 (17.12.87 87/28)**

(54) **A GYROSTABILIZED DEFLECTION DEVICE.**

(30) Priority: **03.06.86 SE 8602506**

(43) Date of publication of application:
**15.06.88 Bulletin  88/24**

(45) Publication of the grant of the patent:
**23.12.92 Bulletin  92/52**

(84) Designated Contracting States:
**DE FR GB SE**

(56) References cited:
**EP-A- 130 869**
**US-A- 4 329 579**
**US-A- 4 436 260**
**US-A- 4 500 051**

(73) Proprietor: **NobelTech Electronics AB**

**S-175 88 Järfälla(SE)**

(72) Inventor: **ENGDING, Alf, Eric, Christer**
**Norra Skogsrundan 23**
**S-184 00 Akersberga(SE)**
Inventor: **ASTROM, Anders, Fredrik**
**Bagarfruvägen 18**
**S-123 55 Farsta(SE)**
Inventor: **SCHLEIMANN-JENSEN, Lars, Johan**
**Ekbacksvägen 33A**
**S-182 34 Danderyd(SE)**

(74) Representative: **Falk, Bengt**
**Bofors AB, Patents and Trademark**
**S-691 80 Karlskoga(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a gyrostabilized deflection device according to the preamble of Claim 1.

Such a device is described in EP-A1-0130869. Fig 3 and 4 thereof disclose a gyro stabilazed target seeker for use in missiles. A movable part of an optical deflection system comprising a spherical element 42 is decoupled from the spin rotation by a bearing 15 and is tiltable around a first axis YG of a cardanic suspension and also around a second orthogonal tilt axis XS which is fixed to a stationary part of the housing of the missile. The stationary part carries a fixed element 41 of the optical deflection system having a spherical recess into which the movable element is fitted. The use of a multielement optical system and a cardanic suspension results in a generally complicated and space demanding construction.

Another device used in a target seeker for projectiles is described in the patent SE 8502509-6. The movable deflection body has in this case a reflecting plane surface or mirror adapted to reflect outgoing or incoming electromagnetic energy from/to a transmmitter and/or receiver. In order to be able to direct the radiation or sensitivity lobe produced by reflection in any desired direction the said body is adapted to cooperate with a two-axes magnetic torque generator, which can transfer torques to the body about two mutually and relative to the spin axis perpendicular axes. By its rotation about the spin axis the said deflection body at the same time serves as a gyrostabilized platform. Such a gyro stabilized platform used as deflection device for outgoing or incoming radiation can be utilized in many applications. One application is that mentioned in the said patent, namely as a gyrostabilized platform in target seekers for projectiles. Another application is anti-aircraft sights mounted on guns and also other types of sights. In common for these applications is that it is a desire that outgoing and/or incoming radiation shall be fixed in space for small angular movements of the envelope, in which the device is mounted. In many applications it is furthermore a requirement that it shall be possible to adjust the radiation or sensitivity lobe into any desired direction by controlled influence of the platform relative to its own space reference.

The aim with the invention is to solve these problems by means of a device, which is more simple as to its mechanical construction and which is less bulky as compared with that described in the patent SE 8502509-6.

According to the invention this is achieved by means of a device of the kind as described in the opening paragraph, which is characterized by the characterising features of claim 1.

By its free support in the spherical recess the deflection body shaped as a gyro rotor will serve as a so called two-axes gyroscope, in which the rotor besides its spin rotation is free to make angular motions about two mutually and relative to the spin axis perpendicular axes. In such a two-axes gyroscope the rotor tends to maintain its angular setting in a space fixed coordinate system independently of small angular motions of the envelope supporting the rotor. If the rotor now according to the invention is used as a diffraction prism in a deflection device for a radiation beam and it has been ensured that, when the envelope makes small angular motions relative to the space fixed rotor, the outgoing or incoming beam makes exactly the same angular motion relative to the envelope as that between envelope and rotor it is easy to see that hereby a radiation lobe or sensitivity lobe is obtained, which is stabilized in space for small angular motions of the envelope. If the device is included in a target seeker for projectiles, thus, the radiation or sensitivity lobe of the target seeker will be fixed in space in spite of the fact that the projectile tumbles. This has been achieved by the simple measure to select the refractive index for the diffraction prism, of which the gyrorotor is a part, in such manner that the radiation lobe will change its angle as much as the spin axis for small motions of the envelope.

Sometimes it may be difficult to achieve the said 1:1 ratio between an angular change of the spin axis of the gyro rotor and the angular change of the radiation or sensitivity lobe for outgoing or incoming radiation. The said 1:1 ratio can then be ensured thereby that the deflection device is combined with a lens system having a suitable diffraction.

Preferably the radiation or sensitivity lobe is always in parallel with the spin axis.

A similar device shaped as an adjustable optical prism and used as scanner in a target seeker for projectiles is previously known by US 4 436 260. However, in this case the deflection body is not imparted any spin rotation and the device has only for its purpose to deflect a radiation beam. This device cannot be used for stabilizing a radiation lobe in space.

The deflection device according to the invention operating with transmission of radiation has many advantages as compared with a similar device operating with reflection. In first hand the radiation path can be made symmetrical, which may be difficult or impossible to achieve in the reflecting embodiment. In certain applications such a symmetry is a requirement. As the deflection device and transmitter/receiver can be placed in line after each other the mechanical construction will be maximally simple and of minimal volume.

The space stabilizing effect relies upon that no precession torques are transferred to the rotor. This can be achieved under continuous driving of the rotor by using a spin drive, which does not produce any such torques. In a simplier embodiment, involving smaller demands on the quality of the spin drive, this drive of the rotor can be disconnectable.

Besides the described space stabilization of the radiation or sensitivity lobe in many applications this lobe must also be controlled to assume any desired direction as counted from its own space reference. For this purpose a preferred embodiment of the device according to the invention is furthermore provided with torque generators, which are able to transfer turning torques to the deflection body about two mutually and relative to the spin axis perpendicular axes.

The invention is illustrated by means of example with reference to the accompanying drawing, in which

Fig 1 shows a longitudinal sectional view of a projectile with a gyrostabilized deflection device according to the invention and

Fig 2 shows a sectional view through the deflection device, taken along the line A-A in figure 1.

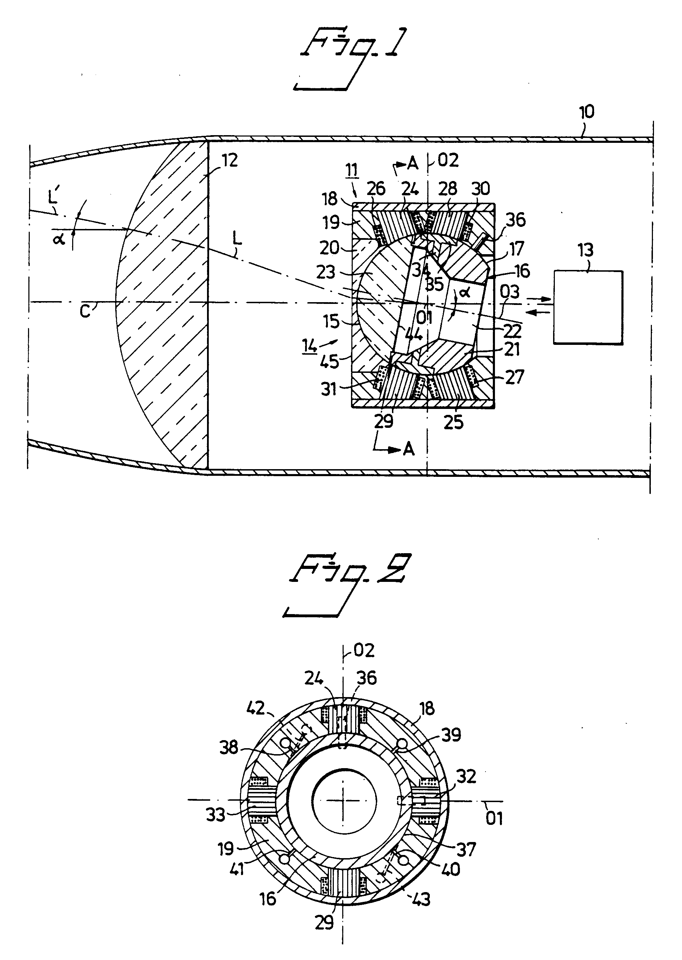

In fig 1 reference numeral 10 designates a projectile envelope, while 11 is a gyro stabilized deflection device according to the invention, fixedly mounted in the envelope and comprising a converging lens 12 also mounted in the envelope, and 13 is a transmitter/receiver. The centrum axis C of the projectile forms at the same time centrum axis for the deflection device and lens. The deflection device can be included as a gyrostabilized platform in a target seeker, which for example operates with electromagnetic energy in the millimeter wavelength range.

The deflection device consists of a part 14 fixedly mounted in the envelope 10 and having a spherical recess 15, in which a movable deflection body 16 with spherical outer contour 17, or ball, is introduced. The fixed part 14 is in the shown example composed by three parts: an outer circular cylindrical ring 18 of soft magnetic material, an intermediate part 19 of non-magnetic material and a central part 20 of a material having a suitable refractive index for the transmitted radiation. The parts 19 and 20 are the elements provided with the said recess 15 and form together a housing or seat for the movable ball 16. The ball 16 is in the shown example composed by two parts: an outer ring-shaped part 21 with a central recess 22 and a calotte-shaped part 23. In operation the incoming and outgoing radiation passes via the recess 22 in the ball 16 through the parts 23 and 20, which in combination form a diffraction prism or "optical wedge" for the radiation, and furthermore through the lens 12. The central ray for such a radiation lobe is shown in the drawing and designated with L. As a result of its spherical shape the ball 16 is free to move by a turning or rotational motion in all three rotational degrees of freedom in its recess 15. The ball 16 is then so shaped that its point of gravity coincides with the rotational centrum for the said motions. Hereby no torques will be transferred to the ball under acceleration and deceleration of the envelope, in which the device is mounted.

I order to be able to transfer torques to the ball 16 for turning the same about two axes 01 and 02 there is a magnetic torque generator of the kind as described and shown in SE 8502509-6. For turning the ball 16 in one direction about the axis 01 there are two magnetic poles 24 and 25 with electrical windings 26, 27. For turning the ball in the opposite direction about the same axis 01 there are two magnetic poles 28, 29 with electrical windings 30, 31. For turning the ball 16 about the axis 02 there are similar magnetic pole pairs, as shown in fig 2 by the magnetic poles 32, 33 and associated windings. The fixed magnetic poles cooperate with a soft magnetic part 34 of the movable ball 16, which part 34 terminates in an equatorial ring 35 of soft magnetic material on the surface of the ball, which ball for the rest is made of non-magnetic material. The outer circular cylindrical fixed ring 18 of soft magnetic material interconnects the outwardly facing ends of all magnetic poles with each other and will close all magnetic field paths.

In order to be able to sense the instantaneous angular position of the ball the fixed part of the deflection device comprises an angle detector 36, which for example cooperates with an optical marking on the surface of the movable ball 16.

Between the spherical recess 15 in the fixed part 14 and the outer spherical surface 17 of the ball 16 there is an air-gap 37 which is active as bearing for the ball. The air-gap is maintained by continuous supply of compressed air to nozzles, which terminate in the said gap. In figure 2 four such nozzles with supply channels are shown and designated with 38, 39, 40, 41.

Furthermore the ball 16 is driven so as to make a rapid spin rotation about a spin axis 03. The spin rotation can be produced by means of an electrical spin motor or by air driving. In the shown example the ball 16 is rotated about the spin axis 03 by means of oblique jets of air, produced by nozzles 42, 43 with supply channels and acting on the flat outside of the ball. Hereby no precession torques will be transferred to the ball.

By its rotation about the spin axis 03 the ball 16 will form a gyro rotor, which as a result of its rotatability about the axes 01 and 02 is supported in a similar manner as in a two-axes gimbal support. The central calotte shaped part 23 of this gyro rotor forms at the same time in combination with the central part 20 of the fixed seat 14 a variable diffraction prism for the transmitted radiation thereby that a plane surface 44, serving as input/output surface for the radiation, forms a variable angle with a plane surface 45 on the fixed part, which said last surface also serves an output/input surface for the radiation. Within the envelope 10 the transmitter/receiver 13 for the transmitted radiation is arranged in a straight line with the deflection device. By setting the movable prism surface 44 on the rotor 16 in different angles relative to the prism surface 45 on the fixed part 14 the direction for the outgoing and/or incoming radiation, in the drawing represented by the central ray L' of the radiation lobe, can be set arbitrarily. Decisive for how the direction of the radiation or sensitivity lobe varies with a variation of the angular setting of the rotor 16 about the axes 01 and 02 is then the refractive index for the materials of which the parts 23 and 20 included in the prism are made, in combination with the diffraction produced by the lens 12. According to the invention the refractive index for the parts 23 and 20, which suitably are made of the same material, is selected in such manner that the outgoing radiation or sensitivity lobe represened by L' is always parallel with the spin axis 03 of the rotor. In the drawing the lobe centrum line L' and the spin axis 03 both form an angle α with the projectile symmetry or centrum line C. As the gyro rotor 16 in absence of precession torques transmitted to the same tends to maintain a set position in space this will mean that the radiation lobe will be space stabilized for small angular motions of the envelope 10. From this own space reference the lobe can then be controlled in any desired manner by transferring torques to the gyro rotor via the two-axes electromagnetic torque generator.

If the refractive index for the material, of which the parts 23 and 20 included in the diffraction prism are made, can be selected in such manner that the prism alone gives rise to the desired 1:1 ratio between the angular change of the radiation or sensitivety lobe and the angular change of the spin axis of the rotor, the lens 12 will be superfluous and can be omitted. If a lens is required this lens may, instead of being made as a separate lens, be integrated with the deflection device thereby that the prism surface 44 or the surface 45 or both are given a concave or convexe shape.

Examples on suitable materials for different kinds of radiation are as follows:
- radar radiation: plastics and ceramics,
- IR-radiation: crystalline materials, as silicon, germanium, zinkselenide and others; also certain glasses and plastics,
- visible light: glass and plastics,
- ultrasonic radiation: plastics and metals.

If the device only has for its purpose to stabilize a radiation lobe in space the torque generator will be superfluous and can be omitted. The spin motor, which also can be of electrical type, may be so constructed that it drives the gyro rotor to a home position and can furthermore be disconnectable, so that the rotor after disconnection rotates freely.

## Claims

1. A gyro stabilized deflection device arranged in the transmission path from/to a transmitter and/or receiver for oscillating energy, preferably electromagnetic radiation, for transmission and/or reception of the said energy in a directed radiation or sensitivity lobe (L'), which device is mounted in an envelope (10) which in operation of the device can be subject to motions relative to space fixed reference directions, and which deflection device comprises a movable spherical deflection body (16) which spherical body (16) is located in a recess (15) of a seat (14) fixedly connected to the envelope (10), at least a central calotte shaped part (23) of the spherical body (16) and of the seat (20) being transparent for the radiation and forming together an adjustable diffraction prism for the radiation, the spherical body (16) having an adjustable prism surface (44) serving as a radiation input/output surface and the seat having a fixed prism surface (45) also serving as a radiation input/output surface, and the refraction indices of the materials, of which the spherical body and the seat are made, being selected to ensure that an angular change of the spin axis (03) of the gyro rotor spherical body (16) results in a corresponding angular change of radiation or sensitivity lobe (L') for outgoing and/or incoming radiation, **characterized** in that said spherical deflection body (16) also forms a gyro rotor which is carried by an air bearing (37, 38, 39, 40, 41) in said recess (15) so that it is movable in three rotational degrees of freedom, that means (42, 43) are provided for imparting the spherical body a rapid gyro rotation about the spin axis (03), which substantially coincides with the direction of transmitted or received radiation, and that a torque generator (24,25,26,27; 28,29,30,31; 32,33; 34,35,18) is provided for the transfer of turning torques to the spherical body about two mutually and relative to the spin axis (03) substantially perpendicular axes (01,02).

2. A gyro stabilized deflection device as claimed in claim 1, **characterized** in that the said device is combined with a lens system (12) having such a diffraction that it in combination with the deflection device produces the said 1:1 ratio between an angular change of the spin axis (03) of the gyro rotor (16) and the resulting angular change of the radiation or sensitivty lobe (L') for outgoing or incoming radiation.

3. A gyro stabilized deflection device as claimed in claim 1 or 2, **characterized** in that the radiation or sensitivity lobe (L') is parallel with the spin axis (03) of the gyro rotor (16).

4. A gyro stabilized deflection device as claimed in claims 1-3, **characterized** in that the spherical deflection body (16) and serving as a gyro rotor consists of at least two parts, an outer ring shaped part (21) with a central opening (22), through which the radiation passes, and the central calotte shaped part (23) forming the movable adjustable part of the said diffraction prism and having a prism surface (44) serving as input/output surface.

**Patentansprüche**

1. Kreiselstabilisierte Ablenkvorrichtung, die im Übertragungsweg von/zu einer Sende-/Empfangseinrichtung für Schwingungsenergie, vorzugsweise elektromagnetischer Strahlung angeordnet ist, zum Übertragen und/oder Empfangen der Energie in einer gerichteten Strahlungs- oder Empfindlichkeitskeule (L') wobei die Vorrichtung in einer Hülle (10) befestigt ist, die bei Betrieb der Vorrichtung Bewegungen relativ zu raumfesten Referenzrichtungen ausgesetzt werden kann, und die Ablenkvorrichtung einen bewegbaren, kugelförmigen Ablenkkörper (16) umfaßt, der in einer Aussparung (15) eines fest mit der Hülle (10) verbundenen Sitzes (14) angeordnet ist, wobei mindestens ein zentraler, kalottenförmiger Teil (23) des kugelförmigen Körpers (16) und des Sitzes (20) transparent für Strahlung ist und sie zusammen ein einstellbares Brechungsprisma für die Strahlung bilden, und der Körper (16) eine einstellbare Prismaoberfläche (44) aufweist, die als Strahlungseintritts-/Austrittsfläche dient und der Sitz eine ortsfeste Prismaoberfläche (45) aufweist, die auch als Strahlungseintritts-/Austrittsfläche dient, und der Brechungskoeffizient der Materialien, aus denen der kugelförmige Körper und der Sitz hergestellt sind, ausgewählt werden, um sicherzustellen, daß eine Winkelveränderung der Spinachse (03) des kugelförmigen Körpers (16) des Kreiselrotors in einer entsprechenden Winkeländerung der Strahlungs- oder Empfindlichkeitskeule L' für aus- und/oder eintretende Strahlung resultiert, dadurch **gekennzeichnet,** daß der kugelförmige Ablenkkörper (16) ferner einen Kreiselmotor bildet, der durch ein Luftlager (37, 38, 39, 40, 41) in der Aussparung (15) getragen wird, so daß er in drei Rotationsfreiheitsgraden bewegbar ist, daß Mittel (42, 43) vorgesehen sind, um dem kugelförmigen Körper eine schnelle Kreiseldrehung umd die Spinachse (03) zu verleihen, die im wesentlichen mit der Richtung der übertragenen oder empfangenen Strahlung zusammenfällt, und daß ein Momentengenerator (24, 25, 26, 27; 28, 29, 30, 31; 34, 35, 18) vorgesehen ist, zum Übertragen von Drehmomenten um zwei gegenseitig und relativ zur Spinachse (03) im wesentlichen senkrechte Achsen (01, 02) auf den kugelförmigen Körper.

2. Vorrichtung nach Anspruch 1, dadurch **gekennzeichnet,** daß die Vorrichtung mit einem Linsensystem (12) kombiniert ist, das eine derartige Brechung aufweist, daß es in Kombination mit der Ablenkvorrichtung das 1:1-Verhältnis zwischen einer Winkeländerung der Spinachse (03) des Kreiselrotors (16) und der resultierenden Winkeländerung der Strahlungs- oder Empfindlichkeitskeule L' für aus- oder eintretende Strahlung erzeugt.

3. Vorrichtung nach Anspruch 1 oder 2, dadurch **gekennzeichnet,** daß die Strahlungs- oder die Empfindlichkeitskeule L' parallel zur Spinachse (03) des Kreiselrotors (16) ist.

4. Vorrichtung nach den Ansprüchen 1 bis 3, dadurch **gekennzeichnet,** daß der kugelförmige und als Kreiselrotor dienende Ablenkkörper (16) aus mindestens zwei Teilen besteht, einem außenringförmigen Teil (21) mit einer zentralen Öffnung (22), durch die die Strahlung verläuft, und einem zentralen kalottenförmigen Teil (23), das den bewegbaren, einstellbaren Teil des Brechungsprismas bildet und eine Prismaoberfläche (44) aufweist, die als Eintritts-/Austrittsfläche dient.

**Revendications**

1. Appareil de déviation à stabilisation gyroscopique, placé sur le trajet d'émission provenant d'un émetteur et/ou dirigé vers un récepteur afin qu'il fasse osciller de l'énergie, de préférence un rayonnement électromagnétique, qui doit être émis et/ou reçu dans un lobe dirigé de rayonnement ou de sensibilité (L'), l'appareil étant monté dans une enveloppe (10) qui, lors du fonctionnement de l'appareil, peut être soumise à des mouvements par rapport à des directions de référence fixes dans l'espace, l'appareil de déviation comprenant un corps sphérique mobile (16) de déviation, le corps sphérique (16) étant placé dans une cavité (15) d'un siège (14) raccordé à demeure à l'enveloppe (10), une partie centrale (23) en forme de calotte au moins du corps sphérique (16) et du siège (20) étant transparente au rayonnement et formant ensemble un prisme ajustable de diffraction pour le rayonnement, le corps sphérique (16) ayant une surface (44) de prisme réglable utilisée comme surface d'entrée-sortie du rayonnement, et le siège ayant une surface fixe (45) de prisme aussi utilisée comme surface d'entrée-sortie du rayonnement, les indices de réfraction des matériaux dont sont formés le corps sphérique et le siège étant sélectionnés afin qu'un changement angulaire de l'axe (03) de rotation gyroscopique du corps sphérique (16) du rotor gyroscopique provoque un changement angulaire correspondant du lobe (L') de rayonnement ou de sensibilité pour le rayonnement sortant et/ou entrant, caractérisé en ce que le corps sphérique (16) de déviation forme aussi un rotor gyroscopique qui est supporté par un palier pneumatique (37, 38, 39, 40, 41) dans la cavité (15) afin qu'il soit mobile avec trois degrés de liberté en rotation, en ce qu'un dispositif (42, 43) est destiné à donner au corps sphérique une rapide rotation gyroscopique autour de l'axe (03) de rotation gyroscopique qui coïncide pratiquement avec la direction du rayonnement émis ou reçu, et en ce qu'un générateur de couple (24, 25, 26, 27 ; 28, 29, 30, 31 ; 32, 33 ; 34, 35, 18) est destiné à transférer des couples de rotation au corps sphérique autour de deux axes (01, 02) qui sont sensiblement perpendiculaires mutuellement et à l'axe (03) de rotation gyroscopique.

2. Appareil de déviation à stabilisation gyroscopique selon la revendication 1, caractérisé en ce que l'appareil est combiné à un ensemble (12) à lentille ayant une diffraction telle que, en combinaison avec l'appareil de déviation, il donne le rapport 1/1 entre la variation angulaire de l'axe (03) de rotation gyroscopique du rotor gyroscopique (16) et la variation angulaire résultante du lobe (L') de rayonnement ou de sensibilité pour le rayonnement sortant ou entrant.

3. Appareil de déviation à stabilisation gyroscopique selon la revendication 1 ou 2, caractérisé en ce que le lobe (L') de rayonnement ou de sensibilité est parallèle à l'axe (03) de rotation gyroscopique du rotor gyroscopique (16).

4. Appareil de déviation à stabilisation gyroscopique selon les revendications 1 à 3, caractérisé en ce que le corps sphérique (16) de déviation, utilisé comme rotor gyroscopique, comprend au moins deux parties, une partie externe (21) de forme annulaire ayant une ouverture centrale (22) par laquelle passe le rayonnement et la partie centrale (23) en forme de calotte formant la partie mobile ajustable du prisme de diffraction et ayant une surface (44) de prisme utilisée comme surface d'entrée-sortie.

Fig.1

Fig.2